# EUROPÄISCHE PATENTSCHRIFT

(11) **EP 2 147 729 B1**
(45) Veröffentlichungstag und Bekanntmachung des Hinweises auf die Patenterteilung: **09.03.2011**
(21) Anmeldenummer: 08013388.7
(22) Anmeldetag: 25.07.2008
(51) Int. Cl.: B21D 5/02, G01B 11/16

(54) **Umformeinrichtung**
Reshaping device
Dispositif de déformation

(43) Veröffentlichungstag der Anmeldung: 27.01.2010
(73) Patentinhaber: Fiessler Elektronik GmbH & Co. KG, 73734 Esslingen (DE)
(72) Erfinder: Fiessler, Lutz, Dr., 73733 Aichwald (DE)
(74) Vertreter: Vetter, Hans

(56) Entgegenhaltungen:
- EP-A- 0 224 437
- EP-A- 1 914 019
- EP-B- 1 204 845
- DE-A1-102004 020 024
- JP-A- 59 160 708

## Beschreibung

Die Erfindung betrifft eine Umformeinrichtung, insbesondere zur Blechbearbeitung, mit wenigstens zwei relativbeweglich zueinander angeordneten Werkzeugen zur Einleitung von Deformationskräften auf ein flächiges Werkstück, das zwischen den Werkzeugen angeordnet werden kann, und mit einer optoelektronischen Winkelmesseinrichtung, die zur Erfassung eines Umformzustands des Werkstücks dient, wobei eine Erfassungsrichtung der Winkelmesseinrichtung zumindest im Wesentlichen orthogonal zu einer von den Werkzeugen bestimmten Bewegungsebene ausgerichtet ist, in der das Werkstück während des Umformvorgangs abgewinkelt wird, wobei die Winkelmesseinrichtung für eine Abtastung einer Werkstück-Stirnseite eingerichtet ist, die bei Durchführung des Umformvorgangs benachbart zur Winkelmesseinrichtung angeordnet ist, und einen Bildaufnehmer und ein optisches System zur Erfassung der Werkstück-Stirnseite umfasst.

Aus der JP 59-160708 ist eine Umformeinrichtung mit einer optischen Überwachungseinrichtung zur Überwachung eines Umformzustands eines Werkstücks bekannt, bei der die Stirnfläche eines zu bearbeitenden Werkstücks mittels einer Beleuchtungseinrichtung beleuchtet wird und das von der Stirnseite des Werkstücks reflektierte Licht mittels eines Kamerasystems aufgenommen und durch eine nachgeschaltete Verarbeitungseinrichtung verarbeitet wird, um den Biegewinkel für das Werkstück zu bestimmen.

Aus der DE 10 2004 020 024 A1 ist eine Werkzeugmaschine mit einem optoelektronischen Sensor bekannt, der ein volumenförmiges Schutzfeld zwischen Werkzeugteilen der Werkzeugmaschine überwacht. Dazu wird von einer seitlich an der Werkzeugmaschine angebrachten Sendeeinrichtung Licht längs eines zwischen den Werkzeugteilen ausgebildeten Öffnungsspalts ausgesendet. Von einer Empfangseinrichtung, die der Sendeeinrichtung gegenüberliegend an einer anderen Seite der Werkzugmaschine angebracht ist, wird eintreffendes Licht detektiert. Die Empfangseinrichtung umfasst eine Matrix von lichtempfindlichen Elementen, die es ermöglichen, das eintreffende Licht in der Art eines Schattenrisses des Werkstücks zu detektieren. Aus dem Schattenriss können Informationen über ein Eindringen von Gegenständen in einen um die Werkzeugteile einzuhaltenden Schutzbereich sowie Messwerte für Werkstückbereiche, die zwischen Sendeeinrichtung und Empfangseinrichtung liegen, ermittelt werden. Bei den werkstückbezogenen Messwerten kann es sich beispielsweise um einen Biegewinkel eines zwischen den Werkzeugteilen aufgenommenen flächigen Werkstücks während der Durchführung eines Abkantvorgangs handeln. Das flächige Werkstück weist bezogen auf seine größte Oberfläche eine geringe Dicke auf und ist beispielsweise als Blechtafel ausgebildet.

Die Aufgabe der Erfindung besteht darin, eine Umformeinrichtung und ein Verfahren zum Betreiben einer Umformeinrichtung bereitzustellen, die während des Umformvorgangs eine Vermessung der Abwinklung des Werkstücks mit erhöhter Präzision ermöglichen.

Diese Aufgabe wird für eine Umformeinrichtung mit den Merkmalen des Anspruchs 1 gelöst. Erfindungsgemäß ist vorgesehen, dass die Winkelmesseinrichtung für eine automatische Fokussierung des optischen Systems auf die Werkstück-Stirnseite eingerichtet ist.

Beim einem bekannten Stand der Technik wird von der Empfangseinrichtung der Schattenriss des Werkstücks detektiert, so dass sämtliche Werkstückbereiche längs der Breitenerstreckung des werkstücks zwischen der Sendeeinrichtung und der Empfangseinrichtung Einfluss auf den Schattenriss nehmen. Demgegenüber ist bei der erfindungsgemäßen Vorrichtung vorgesehen, lediglich die unmittelbar der Winkelmesseinrichtung benachbart gegenüberliegende Werkstück-Stirnseite optoelektronisch abzutasten. Dies ermöglicht die Vorgabe geringerer Anforderungen an die Beleuchtung des Werkstücks und einen vereinfachten Aufbau der Winkelmesseinrichtung. Die abgetastete Werkstück-Stirnseite ist die der winkelmesseinrichtung zugewandte Schmalseite des Werkstücks, die im Verlauf des Umformvorgangs in der von den Werkzeugen bestimmten Bewegungsebene bewegt wird. Insbesondere findet bei einem Abkantvorgang für das Werkstück eine Verschwenkung der Werkstück-Stirnseite um eine zwischen den sich gegenüberliegenden Werkzeugen angeordnete Schwenkachse statt. Durch die Detektion der gegenüberliegend zur Winkelmesseinrichtung angeordneten Werkstück-Stirnseite entfallen Fehlerquellen für die Bestimmung der Werkstückdeformation, die beim Stand der Technik zu berücksichtigen sind. Zu nennen sind hierfür beispielsweise der Einfluss der Welligkeit des Werkstücks über seine Breite oder der Einfluss von dem Werkstück anhaftenden Verschmutzungen, die jeweils den Schattenriss verändern können. Bei der Abtastung der Werkstück-Stirnseite sind diese Fehlerquellen nicht von Belang, weil sie nicht in das Messergebnis eingehen. Somit kann mit Hilfe der erfindungsgemäßen Winkelmesseinrichtung eine präzise Bestimmung des Umformzustands des Werkstücks vorgenommen werden, die gegenüber der bekannten Sensoreinrichtung einen vereinfachten Aufbau der Winkelmesseinrichtung und/oder eine verbesserte Messqualität ermöglicht.

Dabei umfasst die Winkelmesseinrichtung einen Bildaufnehmer und ein optisches System zur Erfassung der Werkstück-Stirnseite. Bei dem Bildaufnehmer kann es sich beispielsweise um einen CCD-Bildsensor (Charge Coupled Device) oder um einen CMOS-Bildsensor (Complementary Metal Oxide Semiconductor) handeln. Diese weisen jeweils in einer rastartigen Matrix angeordnete lichtempfindliche Zellen auf, deren lichtabhängige elektronische Ausgangssignale von einer Auswerteeinheit abgetastet und zu einem Bild zusammengesetzt werden können. Je nach Einsatzzweck können derartige Bildaufnehmer mehrere Tausend bis mehrere Hunderttausend, vorzugsweise in rechteckiger Formation angeordnete, lichtempfindliche Zellen aufweisen. Das optische System dient zur Abbildung der abzutastenden Werkstück-Stirnseite auf die Oberfläche des Bildaufnehmers und kann eine oder mehrere Linsen umfassen.

Erfindungsgemäß ist eine automatische Fokussierung des optischen Systems auf die Werkstück-Stirnseite vorgesehen. Somit ist ein manuelles Eingreifen eines Benutzers nicht erforderlich, vielmehr kann die Winkelmesseinrichtung derart eingerichtet sein, dass sie nach Einlegen des Werkstücks selbsttätig den Abstand zur Werkstück-Stirnseite bestimmt und anschließend die Fokussierung des optischen Systems der Winkelmesseinrichtung vornimmt.

Vorteilhaft ist es, wenn das optische System eine Fokussiereinrichtung umfasst, die für eine Fokussierung auf die Werkstück-Stirnseite eingerichtet ist. Eine Fokussiereinrichtung kann beispielsweise durch einzelne oder zu Gruppen angeordnete Linsen gebildet werden, die relativbeweglich in dem optischen System angeordnet sind. Die in der Umformeinrichtung zu verarbeitenden Werkstücke können unterschiedliche Breiten aufweisen und werden üblicherweise mittig zwischen den Werkzeugen aufgenommen. Dadurch ergeben sich für unterschiedlich breite Werkstücke variierende Abstände zwischen Winkelmesseinrichtung und Werkstück-Stirnseite. Um die erfindungsgemäße Detektion der Werkstück-Stirnseite in vorteilhafter Weise vornehmen zu können, wird das optische System werkstückindividuell mit Hilfe der Fokussiereinrichtung auf die gegenüberliegend angeordnete Werkstück-Stirnseite fokussiert.

Vorteilhaft ist es, wenn die Winkelmesseinrichtung eine Abstandsmesseinrichtung zur Ermittlung eines Abstands zwischen Bildaufnehmer und Werkstück-Stirnseite umfasst. Bei der Abstandsmesseinrichtung kann es sich um einen diskreten Sensor, beispielsweise um einen Ultraschallsensor handeln. Dieser sendet ein Ultraschallsignal aus und wertet ein zurückkehrendes Echo aus, um den Abstand zwischen Winkelmesseinrichtung und Werkstück-Stirnseite zu ermitteln. Mit Hilfe des ermittelten Abstands kann anschließend die Fokussierung des optischen Systems auf die gegenüberliegende Werkstück-Stirnseite vorgenommen werden, so dass das Abbild der Werkstück-Stirnseite mit maximaler Bildschärfe auf den Bildaufnehmer der Winkelmesseinrichtung abgebildet wird.

Vorzugsweise ist eine automatische Fokussierung des optischen Systems auf die Werkstück-Stirnseite anhand eines von der Abstandsmesseinrichtung bereitgestellten Abstandssignals vorgesehen. Dabei erfolgt die Fokussierung anhand eines von der Abstandsmesseinrichtung bereitgestellten Abstandssignals. Insbesondere kann die Abstandsmesseinrichtung in die Winkelmesseinrichtung, die vorzugsweise eine Bildverarbeitungseinrichtung zur Erkennung der Werkstück-Stirnseite umfasst, integriert sein. In diesem Fall erfolgt die Anpassung der Fokussierung der Winkelmesseinrichtung an die Lage der Werkstück-Stirnseite allein durch Variation der Fokussierung des optischen Systems bis zum Erreichen einer maximalen Bildschärfe.

In weiterer Ausgestaltung der Erfindung ist vorgesehen, dass der Winkelmesseinrichtung eine Beleuchtungseinrichtung zur Beleuchtung der Werkstück-Stirnseite, insbesondere mit monochromatischem Licht, zugeordnet ist. Mit Hilfe der Beleuchtungseinrichtung können reproduzierbare, auf die Empfangscharakteristik der Winkelmesseinrichtung angepasste Beleuchtungsverhältnisse an der Werkstück-Stirnseite bereitgestellt werden. Diese ermöglichen eine rasche und präzise Erfassung der Lage des Werkstücks vor und während des Umformvorgangs. Als Beleuchtungseinrichtung kann beispielsweise eine Glühlampe oder Glühlampenanordnung mit breitem elektromagnetischen Wellenspektrum oder eine Gasentladungslampe oder Gasentladungslampenanordnung mit schmalem elektromagnetischen Wellenlängenspektrum eingesetzt werden. Vorzugsweise ist die Beleuchtungseinrichtung als monochromatische Lichtquelle oder als Anordnung derartiger Lichtquellen, insbesondere Laserdioden, ausgebildet. Besonders bevorzugt weist die Winkelmesseinrichtung in einem vom Bildaufnehmer technisch bedingten oder, insbesondere durch Filtermittel, vorgebbaren Bereich des Wellenlängenspektrums elektromagnetischer Wellen eine besonders hohe Empfindlichkeit auf. Bei Auswahl der Wellenlänge der Beleuchtungseinrichtung korrespondierend zur hohen Empfindlichkeit der Winkelmesseinrichtung für den entsprechenden Wellenlängenbereich kann der Einfluss von Umgebungslicht reduziert oder vollständig eliminiert und das Messergebnis verbessert werden.

Vorteilhaft ist es, wenn die Winkelmesseinrichtung mit einer Auswerteeinrichtung gekoppelt ist, die für eine Bestimmung eines zwischen der Werkstück-Stirnseite und einer Bezugsgeometrie eingeschlossenen Winkels anhand von Signalen des Bildaufnehmers eingerichtet ist. Der Auswerteeinrichtung kommt somit die Aufgabe zu, die von den lichtempfindlichen Zellen des Bildaufnehmers bereitgestellten Signale zu einem Gesamtbild zusammenzufassen. Daraus wird die Lage der Werkstück-Stirnseite oder zumindest die Lage der die Werkstück-Stirnseite begrenzenden Kanten des Werkstücks erfasst. Dies kann insbesondere mit bekannten Algorithmen zur Erkennung von Werkstückkanten erfolgen. Anhand der Werkstück-Stirnseite oder der Kanten kann anschließend eine Bestimmung eines Winkels vorgenommen werden, den die Werkstück-Stirnseite mit einer Bezugsgeometrie, insbesondere einer Vertikalen, einer frei wählbaren Bezugsgeraden oder einer Bezugsebene einnimmt und der als Maß für die in das Werkstück eingeleitete Deformation dient.

In weiterer Ausgestaltung der Erfindung ist vorgesehen, dass eine Ausbreitungsrichtung eines von der Beleuchtungseinrichtung abgegebenen Strahlenbündels einer Ausbreitungsrichtung eines von der Werkstück-Stirnseite ausgehenden Strahlenbündels zumindest im Wesentlichen entgegengesetzt ist. Um einen möglichst starken Kontrast für das Abbild der Werkstück-Stirnseite auf dem Bildaufnehmer hervorzurufen, findet eine Beleuchtung der Werkstück-Stirnseite mit Hilfe der Beleuchtungseinrichtung derart statt, dass sich die Lichtstrahlen der Beleuchtungseinrichtung im Wesentlichen parallel zur größten Werkstückoberfläche ausbreiten. Damit treffen diese Strahlenbündel im Wesentlichen senkrecht auf die Werkstück-Stirnseite auf, die üblicherweise orthogonal zur größten Werkstückoberfläche ausgerichtet ist. Entsprechend breiten sich von der Werkstück-Stirnseite ausgehende Strahlenbündel mit einer Ausbreitungsrichtung aus, die der Ausbreitungsrichtung der Beleuchtungs-Strahlenbündel im Wesentlichen entgegengesetzt ist, wodurch ein starker Kontrast der Werkstück-Stirnseite gegenüber umliegenden Bereichen, die auf den Bildaufnehmer abgebildet werden, begünstigt wird.

Vorzugsweise sind Winkelmesseinrichtungen an entgegengesetzten Seiten angeordnet. Dadurch können die einander entgegengesetzten Werkstück-Stirnseiten des Werkstücks erfasst werden, wodurch eine besonders präzise Erfassung des Umformzustands des Werkstücks während des Umformvorgangs ermöglicht wird. Vorzugsweise ist jeder der Winkelmesseinrichtungen eine Beleuchtungseinrichtung zugeordnet, um für die jeweilige Werkstück-Stirnseite eine vorteilhafte Beleuchtung zu gewährleisten. Denkbar ist es, die Winkelmesseinrichtungen und die zugeordneten Beleuchtungseinrichtungen jeweils auf unterschiedliche Lichteigenschaften, insbesondere Wellenlängen und/oder Polarisierungen, abzustimmen. Dadurch kann eine gegenseitige Beeinflussung der gegenüberliegend angeordneten Winkelmesseinrichtungen und der jeweils zugehörigen Beleuchtungseinrichtungen minimiert werden.

In weiterer Ausgestaltung der Erfindung ist wenigstens einem Werkzeug eine Fokussierhilfe zugeordnet. Bei der Fokussierhilfe kann es sich beispielsweise um eine von der Winkelmesseinrichtung zuverlässig erfassbare Markierung handeln, die eine Fokussierung des optischen Systems erleichtert. Bevorzugt dient die Fokussierhilfe für eine Grobfokussierung des optischen Systems. Nach Einlegen des Werkstücks findet dann eine abschließende Fokussierung des optischen Systems statt. Besonders bevorzugt ist die Fokussierhilfe bei einer Abkantpresse dem Oberwerkzeug zugeordnet, das üblicherweise auf die Breite des zu deformierenden Werkstücks angepasst ist. Eine Fokussierhilfe kann insbesondere als vom Werkzeug abragende Tafel ausgebildet sein, die eine von der Winkelmesseinrichtung gut erkennbare Markierung trägt und die jeweils auf die Lage der der Winkelmesseinrichtung zugewandten Vorderkante des Werkzeugs angepasst wird. Alternativ kann die Fokussierhilfe als eine auf der der Winkelmesseinrichtung zugewandten Stirnfläche des Werkzeugs angeordnete Markierung ausgeführt sein.

Vorteilhaft ist es, wenn die Winkelmesseinrichtung an einem Schlitten angebracht ist, der beweglich an einem Grundgestell angeordnet ist und der ein Werkzeug trägt. Dadurch wird die Winkelmesseinrichtung stets mit dem Werkzeug mitgeführt und erlaubt eine rasche Bestimmung des Umformzustands des Werkstücks. Vorzugsweise ist die Winkelmesseinrichtung mit einer Sicherheitseinrichtung gekoppelt, die den Arbeitsspalt zwischen den Werkzeugen während des Einspannvorgangs für das Werkstück und beim Umformvorgang überwacht, um bei einem Eindringen von Gegenständen, insbesondere Körperteilen eines Bedieners, in einen vorgegebenen Schutzraum eine Abschaltung der Umformeinrichtung vornehmen zu können. Besonders bevorzugt ist die Winkelmesseinrichtung in die Sicherheitseinrichtung integriert.

Für das Verfahren wird die Aufgabe der Erfindung mit den Merkmalen des Anspruchs 11 gelöst. Dabei ist vorgesehen, eine Umformeinrichtung derart zu betreiben, dass eine Abtastung der Werkstück-Stirnseite mit einer optoelektronischen Winkelmesseinrichtung vorgenommen wird. Ein Umformzustand des Werkstücks wird in einer Auswerteeinrichtung anhand von Signalen der Winkelmesseinrichtung vorgenommen, um ein Umformsignal an eine Steuereinrichtung der Umformeinrichtung bereitzustellen. Mit dem erfindungsgemäßen Verfahren wird eine rasche und präzise Bestimmung der räumlichen Lage der Werkstück-Stirnseite ermöglicht, um mit Hilfe des ermittelten Messergebnisses eine Steuerung oder Regelung des weiteren Umformvorgangs vornehmen zu können.

Nach der Erfindung ist vorgesehen, ein optisches System der Winkelmesseinrichtung auf die Werkstück-Stirnseite des zu bearbeitenden Werkstücks zu fokussieren. Dadurch wird einerseits gewährleistet, dass die Werkstück-Stirnseite von der Winkelmesseinrichtung zuverlässig erkannt werden kann, andererseits werden dadurch Störeinflüsse, die insbesondere durch das Werkstück und/oder Umgebungslicht bedingt sein können, zumindest nahezu vollständig eliminiert.

Vorteilhaft ist es, wenn die Fokussierung des optischen Systems auf die Werkstück-Stirnseite automatisiert, insbesondere mittels eines Abstandssignals einer Abstandsmesseinrichtung, vorgenommen wird. Dadurch entfallen Rüstzeiten bei der Einrichtung der Umformeinrichtung. Zudem kann dadurch flexibel auf unterschiedliche Breiten der nacheinander umzuformenden Werkstücke und gegebenenfalls auf Positionsunterschiede bei Einlegen der Werkstücke in die Umformeinrichtung reagiert werden. Als Abstandssignal kommt insbesondere ein Signal eines diskreten Abstandssensors zur Anwendung.

In weiterer Ausgestaltung der Erfindung ist vorgesehen, dass eine Beleuchtung der Werkstück-Stirnseite mit Auflicht vorgenommen wird. Dabei ist eine Strahlausbreitungsrichtung der von einer Beleuchtungseinrichtung abgegebenen Lichtstrahlen einer Strahlausbreitungsrichtung der in der Winkelmesseinrichtung eintreffenden Lichtstrahlen im Wesentlichen entgegengesetzt. Dadurch lässt sich eine rasche und exakte Bestimmung der Lage der Werkstück-Stirnseite durchführen.

Ein Ausführungsbeispiel der Erfindung ist in der Zeichnung dargestellt und in der nachfolgenden Beschreibung näher erläutert. Dabei zeigt:
- Figur 1: eine schematische Vorderansicht einer Umformein- richtung in einer Neutrallage, die an gegenüberlie- genden Endbereichen mit Winkelmesseinrichtungen ausgerüstet ist,
- Figur 2: eine Seitenansicht der Umformeinrichtung gemäß Fi- gur 1,
- Figur 3: eine Seitenansicht der Umformeinrichtung gemäß der Figuren 1 und 2 in einer Arbeitsposition, und
- Figur 4: eine schematische Darstellung der Winkelmessein- richtung.

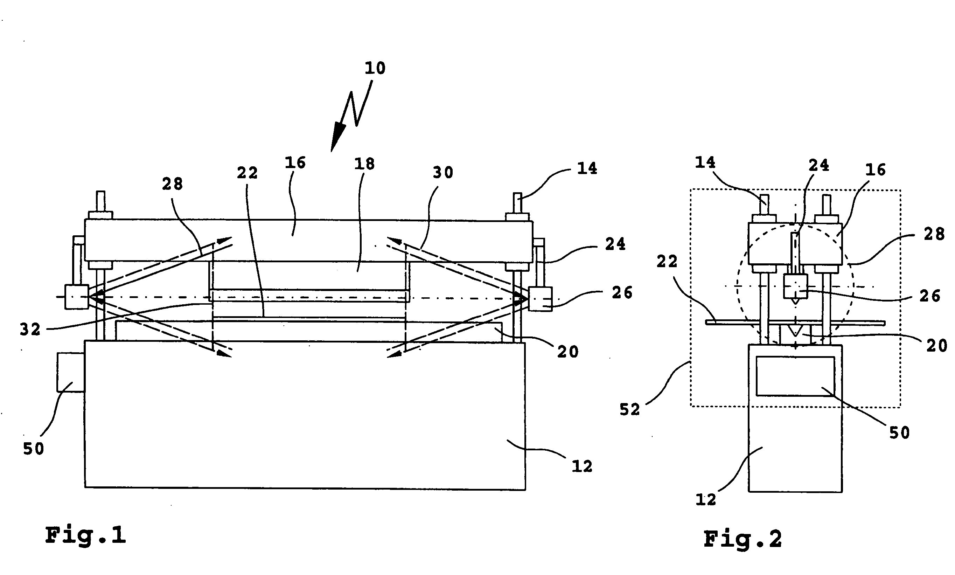

Eine in den Figuren 1 bis 3 exemplarisch als Abkantpresse 10 dargestellte Umformeinrichtung umfasst ein Maschinenbett 12, in dessen Eckbereichen jeweils nach oben abragende Führungssäulen 14 angeordnet sind. An den Führungssäulen 14 ist ein in vertikaler Richtung zum Maschinenbett 12 linearbeweglicher Werkzeughalter 16 angeordnet. Der Werkzeughalter 16 ist von nicht dargestellten Antriebsmitteln längs der Führungssäulen 14 verschiebbar und trägt ein als Stempel 18 schneidenförmig ausgebildetes Werkzeug. Dem Stempel 18 gegenüberliegend ist am Maschinenbett 12 ein als Matrize 20 ausgeführtes Werkzeug angeordnet, das ein zum Stempel 18 korrespondierendes V-förmiges Nutprofil aufweist. Die Matrize 20 erstreckt sich nahezu über die gesamte Breite des Maschinenbetts 12. Der Stempel 18 ist hinsichtlich seiner Breite auf die Breite des zu verarbeitenden Werkstücks 22 angepasst, das in den Figuren 1 und 2 als ebene Blechplatte dargestellt ist.

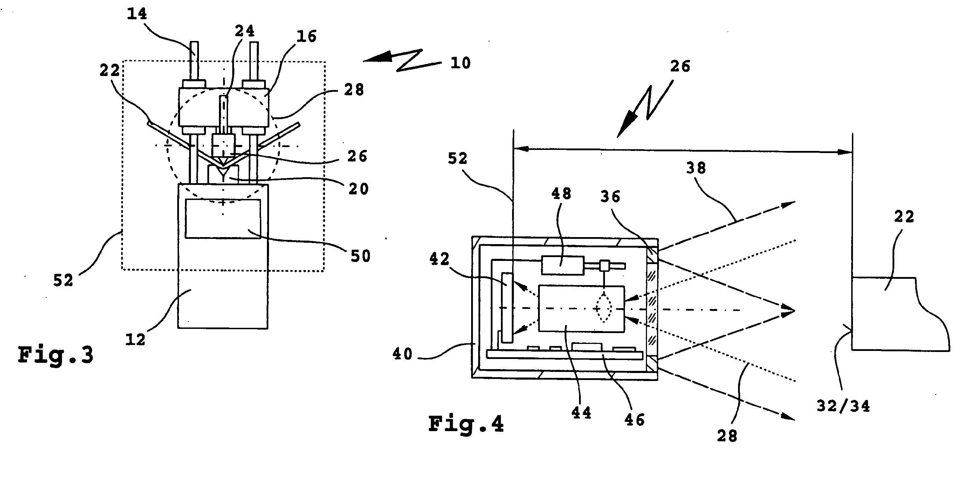

Jeweils endseitig am Werkzeughalter 16 sind an Haltearmen 24 angebrachte, als Kameras 26 ausgebildete Winkelmesseinrichtungen angeordnet, die zur Erfassung des Umformzustands des Werkstücks 10 dienen. Wie aus der Darstellung der Figuren 1 bis 3 zu entnehmen ist, erfassen die Kameras 26 jeweils einen kegelabschnittsförmigen Beobachtungsraum 28, der symbolisch durch Randlichtstrahlen 30 dargestellt ist. Eine Fokusebene 32 der Kameras 26 ist jeweils auf eine Werkstück-Stirnseite 34 des Werkstücks 22 eingestellt, so dass eine Abbildung der Werkstück-Stirnseite 34 scharf auf eine Bildebene 54 eines in der Figur 4 näher dargestellten und nachstehend näher beschriebenen Bildaufnehmers 42 abgebildet wird.

Der Kamera 26 sind beispielsweise ringförmig angeordnete, als Beleuchtungseinrichtung dienende Laserdioden 36 zugeordnet, wie sie in der Figur 4 näher dargestellt sind. Andere Anordnungen von Laserdioden 36 oder anderen Beleuchtungsmitteln wie Glühbirnen, Gasentladungslampen oder Leuchtdioden können alternativ oder ergänzend vorgesehen werden. Eine Strahlausbreitungsrichtung 38 der Laserdioden 36 ist im Wesentlichen auf die jeweils gegenüberliegende Werkstück-Stirnseite 34 gerichtet. Die von der Werkstück-Stirnseite 34 reflektierten Lichtstrahlen treffen im Wesentlichen in entgegengesetzter Richtung zur Ausbreitungsrichtung der von den Laserdioden 36 abgegebenen Strahlenbündel in der Kamera 26 ein.

Wie der Figur 4 entnommen werden kann, umfasst die Kamera 26 ein Gehäuse 40, in dem ein beispielsweise als CCD-Chip 42 ausgeführter Bildaufnehmer sowie ein dem CCD-Chip 42 zugeordnetes optisches System 44 mit nicht näher dargestellten sphärisch und/oder asphärischen Linsen angeordnet sind. Weiterhin sind im Gehäuse 40 eine als Auswerteeinrichtung dienende Elektronikplatine 46 und eine Linsenverstelleinrichtung 48, die als Fokussiereinrichtung dient, aufgenommen. Der CCD-Chip 42, das optische System 44 und die Laserdioden 36 sind derart aufeinander abgestimmt, dass von den Laserdioden 36 ausgesandte Lichtstrahlen, die auf die Werkstück-Stirnseite 34 auftreffen, in entgegengesetzter Strahlausbreitungsrichtung durch das optische System 44 hindurchtreten.

Für eine exakte Erfassung der Kanten der Werkstück-Stirnseite 34 mit dem CCD-Chip 42 müssen diese scharf auf die Bildebene 54 des CCD-Chips 42 abgebildet werden. Um dies bei unterschiedlichen Ausdehnungen des Werkstücks 22 gewährleisten zu können, ist die Linsenverstelleinrichtung 48 vorgesehen, die eine Linse oder Linsengruppe innerhalb des optischen Systems 44 translatorisch verschieben kann und somit die gewünschte Fokussierung des Abbilds der Werkstück-Stirnseite 34 auf den CCD-Chip 42 bewirken kann.

Bei der dargestellten Ausführungsform einer Kamera 26 wird mit Hilfe der Elektronikplatine 46 eine Auswertung des vom CCD-Chip 42 bereitgestellten Bildes vorgenommen, um die Lage der Kanten der Werkstück-Stirnseite 34 zu ermitteln. Anhand des ermittelten Bildes wird eine Verstellung der Linsenverstelleinrichtung 48 vorgenommen, bis die Kanten der Werkstück-Stirnseite 34 scharf auf der Bildebene 54 des CCD-Chips 42 abgebildet werden.

Durch die kegelförmige Ausbildung des Beobachtungsraums 28, der von der Kamera 26 erfasst werden kann, ist eine Abtastung der Werkstück-Stirnseite 34 sowohl in der Neutrallage, wie sie in den Figuren 1 und 2 dargestellt ist, wie auch in einer Deformationslage gemäß der Figur 3 möglich.

Die mit Hilfe der Elektronikplatine 46 erfasste Lage der Kanten der Werkstück-Stirnseite 34 ermöglicht einen Abgleich zwischen der Ist-Situation und einer von einer Steuereinrichtung 50 der Abkantpresse 10 vorgegebenen Solldeformation. Die Kanten der Werkstück-Stirnseite 34 bewegen sich während des Umformvorgangs in der Bewegungsebene 52, die orthogonal zur längsten Erstreckungsrichtung der Werkzeuge 18, 20 und zu den größten Oberflächen des Werkstücks 22 ausgerichtet ist.

Da die umzuformenden Werkstücke 22 üblicherweise eine erhebliche Elastizität aufweisen, ist es für ein präzises Umformergebnis von Interesse, während des Umformvorgangs zeitweilig die auf das Werkstück 22 einwirkenden Kräfte zu reduzieren, um die bereits erreichte plastische Deformation des Werkstücks 22 beurteilen zu können. Ausgehend von dem Ergebnis dieser Vermessung kann anschließend eine entsprechende Zustellung des Stempels 18 vorgenommen werden.

Für die Umformung eines Werkstücks 22 mit Hilfe der Umformeinrichtung 10 wird zunächst ein Stempel 18 am Werkzeughalter 16 angebracht, der im Wesentlichen der Breite des zu verarbeitenden Werkstücks 22 entspricht. Anschließend werden die Kameras 26 aktiviert, um nach Einlegen des Werkstücks 22 die Fokussierung auf die Werkstück-Stirnseiten 34 vorzunehmen. Dies geschieht in der vorstehend geschilderten Weise durch Annäherung an diejenige Abbildung der Kanten der Werkstück-Stirnseite 34 auf die Bildebene 54 des CCD-Chips 42, die die größte Schärfe aufweist. Um dies zu bewirken, wird die Linsenverstelleinrichtung 48 entsprechend von der Elektronikplatine 46 aktiviert. Während des Fokussierungsvorganges und des nachfolgenden Vermessungsvorgangs für das Werkstück 22 sind die Laserdioden 36 aktiviert, um eine rasche und zuverlässige Erkennung der Kanten der Werkstück-Stirnseite 34 zu ermöglichen.

Bei dem nachfolgenden Umformschritt verlagern sich die Kanten der Werkstück-Stirnseite 34 bedingt durch die Deformation des Werkstücks 22. Diese Verlagerung der Werkstück-Stirnseiten 34 in der Art einer Schwenkbewegung um eine im Bereich der Werkzeuge verlaufende Schwenkachse wird mit Hilfe des CCD-Chips 42 und des zugeordneten optischen Systems 44 detektiert und in der Elektronikplatine 46 ausgewertet. Die Elektronikplatine 46 gibt ein entsprechendes Winkelsignal an die Steuereinrichtung 50 ab, um den Umformvorgang entsprechend den in der Steuereinrichtung 50 abgelegten Vorgaben zu regeln.

Bei einer nicht dargestellten Ausführungsform der Erfindung ist die Kamera an einer Überwachungseinrichtung angebracht, die zur Überwachung eines Schutzraums längs der Erstreckung der Werkzeuge vorgesehen ist und die entweder am Werkszeughalter oder am Maschinenbett angeordnet ist. Vorzugsweise ist die Kamera in die Überwachungseinrichtung integriert ausgeführt.

## Patentansprüche

1. Umformeinrichtung, insbesondere zur Blechbearbeitung, mit wenigstens zwei relativbeweglich zueinander angeordneten Werkzeugen (18, 20) zur Einleitung von Deformationskräften auf ein flächiges Werkstück (22), das zwischen den Werkzeugen (18, 20) angeordnet werden kann, und mit einer optoelektronischen Winkelmesseinrichtung (26), die zur Erfassung eines Umformzustands des Werkstücks (22) dient, wobei eine Erfassungsrichtung der Winkelmesseinrichtung (26) zumindest im Wesentlichen orthogonal zu einer von den Werkzeugen (18, 20) bestimmten Bewegungsebene (52) ausgerichtet ist, in der das Werkstück (22) während des Umformvorgangs abgewinkelt wird, wobei die Winkelmesseinrichtung (26) für eine Abtastung einer Werkstück-Stirnseite (34) eingerichtet ist, die bei Durchführung des Umformvorgangs benachbart zur Winkelmesseinrichtung (26) angeordnet ist und einen Bildaufnehmer (42) und ein optisches System (44) zur Erfassung der Werkstück-Stirnseite (34) umfasst, **dadurch gekennzeichnet, dass** die Winkelmesseinrichtung (26) für eine automatische Fokussierung des optischen Systems (44) auf die Werkstück-Stirnseite (34) eingerichtet ist.

2. Umformeinrichtung nach Anspruch 1, **dadurch gekennzeichnet, dass** das optische System (44) eine Fokussiereinrichtung (48) umfasst, die für eine Fokussierung auf die Werkstück-Stirnseite (34) eingerichtet ist.

3. Umformeinrichtung nach einem der vorhergehenden Ansprüche, **dadurch gekennzeichnet, dass** die Winkelmesseinrichtung (26) eine Abstandsmesseinrichtung zur Ermittlung eines Abstands zwischen Bildaufnehmer (42) und Werkstück-Stirnseite (34) umfasst.

4. Umformeinrichtung nach Anspruch 3, **dadurch gekennzeichnet, dass** die Winkelmesseinrichtung (26) für eine automatische Fokussierung des optischen Systems (44) auf die Werkstück-Stirnseite (34) anhand eines von der Abstandsmesseinrichtung bereitgestellten Abstandssignals eingerichtet ist.

5. Umformeinrichtung nach einem der vorhergehenden Ansprüche, **dadurch gekennzeichnet, dass** der Winkelmesseinrichtung (26) eine Beleuchtungseinrichtung (36) zur Beleuchtung der Werkstück-Stirnseite (34), vorzugsweise mit Licht mit geringer spektraler Bandbreite, insbesondere mit monochromatischem Licht, zugeordnet ist.

6. Umformeinrichtung nach einem der vorhergehenden Ansprüche, **dadurch gekennzeichnet, dass** die Winkelmesseinrichtung (26) mit einer Auswerteeinrichtung (46) gekoppelt ist, die für eine Bestimmung eines zwischen der Werkstück-Stirnseite (34) und einer Bezugsgeometrie eingeschlossenen Winkels anhand von Signalen eines Bildaufnehmers (42) eingerichtet ist.

7. Umformeinrichtung nach Anspruch 5, **dadurch gekennzeichnet, dass** eine Ausbreitungsrichtung eines von der Beleuchtungseinrichtung (36) abgegebenen Strahlenbündels einer Ausbreitungsrichtung eines von der Werkstück-Stirnseite (34) ausgehenden Strahlenbündels im Wesentlichen entgegengesetzt ist.

8. Umformeinrichtung nach einem der vorhergehenden Ansprüche, **dadurch gekennzeichnet, dass** Winkelmesseinrichtungen (26) an entgegengesetzten Seiten angeordnet sind.

9. Umformeinrichtung nach einem der vorhergehenden Ansprüche, **dadurch gekennzeichnet, dass** wenigstens einem Werkzeug (18, 20) eine Fokussierhilfe zugeordnet ist.

10. Umformeinrichtung nach einem der vorhergehenden Ansprüche, **dadurch gekennzeichnet, dass** die Winkelmesseinrichtung (26) an einem Schlitten (16) angebracht ist, der beweglich an einem Grundgestell (12) angeordnet ist und der ein Werkzeug (18) trägt.

11. Verfahren zum Betreiben einer, insbesondere nach einem der vorhergehenden Ansprüche ausgebildeten, Umformeinrichtung, **gekennzeichnet durch** die Schritte
- Abtasten einer Werkstück-Stirnseite (34) mit einer optoelektronischen winkelmesseinrichtung (26),
- Ermitteln eines Umformzustands des Werkstücks (22) in einer Auswerteeinrichtung (46) anhand von Signalen der Winkelmesseinrichtung (26),
- Bereitstellen eines Umformsignals an eine Steuereinrichtung (50) der Umformeinrichtung (10).
- Fokussieren eines optischen Systems (44) der winkelmesseinrichtung (26) auf die Werkstück-Stirnseite (34) des zu bearbeitenden Werkstücks (22), wobei die Fokussierung des optischen Systems (44) auf die Werkstück-Stirnseite (34) automatisiert vorgenommen wird.

12. Verfahren nach Anspruch 11, **dadurch gekennzeichnet, dass** die Fokussierung des optischen Systems (44) auf die Werkstück-Stirnseite (34) automatisiert mittels eines Abstandssignals einer Abstandsmesseinrichtung vorgenommen wird.

13. Verfahren nach einem der Ansprüche 11 oder 12, **dadurch gekennzeichnet, dass** eine Beleuchtung der Werkstück-Stirnseite (34) mit Auflicht vorgenommen wird.

## Claims

1. Forming device, in particular for sheet metal processing, with at least two tools (18, 20) arranged for movement relative to each other for introducing deformation forces into a flat workpiece (22) which can be placed between the tools (18, 20), and with an optoelectronic angular position measuring device (26) for detecting a forming state of the workpiece (22), wherein a detection device of the angular position measuring device (26) is oriented at least substantially orthogonal to a motion plane (52) determined by the tools (18, 20), in which motion plane the workpiece (22) is bent in the forming process, wherein the angular position measuring device (26) is configured for scanning a workpiece end face (34) which is adjacent to the angular position measuring device (26) during the forming process, and wherein the angular position measuring device (26) comprises a picture taking device (42) and an optical system (44) for detecting the workpiece end face (34), **characterised in that** the angular position measuring device (26) is configured for an automatic focussing of the optical system (44) on the workpiece end face (34).

2. Forming device according to claim 1, **characterised in that** the optical system (44) comprises a focussing device (48) which is configured for focussing on the workpiece end face (34).

3. Forming device according to any of the preceding claims, **characterised in that** the angular position measuring device (26) comprises a distance measuring device for detecting a distance between the picture taking device (42) and the workpiece end face (34).

4. Forming device according to claim 3, **characterised in that** the angular position measuring device (26) is configured for an automatic focussing of the optical system (44) on the workpiece end face (34) using a distance signal provided by the distance measuring device.

5. Forming device according to any of the preceding claims, **characterised in that** a lighting device (36) for lighting the workpiece end face (34), preferably with light of a small spectral bandwidth, in particular with monochromatic light, is assigned to the angular position measuring device (26).

6. Forming device according to any of the preceding claims, **characterised in that** the angular position measuring device (26) is coupled to an evaluation device (46) configured for determining an angle enclosed between the workpiece end face (34) and a reference geometry using signals of a picture taking device (42).

7. Forming device according to claim 5, **characterised in that** a propagation device of a beam of rays emitted by the lighting device (36) is located substantially opposite a propagation device of a beam of rays emitted by the workpiece end face (34).

8. Forming device according to any of the preceding claims, **characterised in that** angular position measuring devices (26) are provided on opposite sides.

9. Forming device according to any of the preceding claims, **characterised in that** a focussing aid is assigned to at least one tool (18, 20).

10. Forming device according to any of the preceding claims, **characterised in that** the angular position measuring device (26) is mounted on a slide (16) which is movably mounted on a base frame (12) and which supports a tool (18).

11. Method for operating a forming device which is in particular designed according to any of the preceding claims, comprising the following steps:
- the scanning of a workpiece end face (34) with an optoelectronic angular position measuring device (26),
- the detemination of a forming state of the workpiece (22) in an evaluation device (46) using signals of the angular position measuring device (26),
- the provision of a forming signal for a control unit (50) of the forming device (10),
- the focussing of an optical system (44) of the angular position measuring device (26) on the end face (34) of the workpiece (22) to be processed, the focussing of an optical system (44) on the workpiece end face (34) being automated.

12. Method according to claim 1, **characterised in that** the focussing of the optical system (44) on the workpiece end face (34) is automated using a distance signal of a distance measuring device.

13. Method according to claim 11 or 12, **characterised in that** the workpiece end face (34) is lit by means of incident light.

## Revendications

1. Dispositif de formage, en particulier pour le traitement des tôles, comportant au moins deux outils (18, 20) disposés de manière mobile l'un par rapport à l'autre et destinés à introduire les forces de déformation sur une pièce à former (22) plane, qui peut être disposée entre les outils (18, 20), et comportant un dispositif de mesure d'angle (26) optoélectronique, qui est destiné à détecter un état de formage de la pièce (22), une direction de détection du dispositif de mesure d'angle (26) étant orientée au moins sensiblement orthogonalement à un plan de mouvement (52), qui est déterminé par les outils (18, 20) et dans lequel la pièce (22) est pliée pendant l'opération de formage, le dispositif de mesure d'angle (26) étant configuré pour un balayage d'une face frontale (34) de la pièce à former, laquelle est disposée, pendant la mise en oeuvre de l'opération de formage, au voisinage du dispositif de mesure d'angle (26) et comporte une unité de prise de vue (42) et un système optique (44) pour détecter la face frontale (34) de la pièce, **caractérisé en ce que** le dispositif de mesure d'angle (26) est conçu pour une focalisation automatique du système optique (44) sur la face frontale (34) de la pièce à former.

2. Dispositif de formage selon la revendication 1, **caractérisé en ce que** le système optique (44) comporte un dispositif de focalisation (48), qui est configuré pour une focalisation sur la face frontale (34) de la pièce à former.

3. Dispositif de formage selon l'une quelconque des revendications précédentes, **caractérisé en ce que** le dispositif de mesure d'angle (26) comporte un dispositif de mesure de distance, destiné à déterminer une distance entre l'unité de prise de vue (42) et la face frontale (34) de la pièce à former.

4. Dispositif de formage selon la revendication 3, **caractérisé en ce que** le dispositif de mesure d'angle (26) est configuré pour une focalisation automatique du système optique (44) sur la face frontale (34) de la pièce à former, à l'appui d'un signal de distance délivré par le dispositif de mesure de distance.

5. Dispositif de formage selon l'une quelconque des revendications précédentes, **caractérisé en ce qu'**au dispositif de mesure d'angle (26) est associé un dispositif d'éclairage (36) destiné à éclairer la face frontale (34) de la pièce à former, de préférence avec une lumière à faible largeur de bande spectrale, en particulier avec une lumière monochromatique.

6. Dispositif de formage selon l'une quelconque des revendications précédentes, **caractérisé en ce que** le dispositif de mesure d'angle (26) est couplé à un dispositif d'analyse (46), qui est configuré pour déterminer un angle inclus entre la face frontale (34) de la pièce à former et une géométrie de référence, à l'appui des signaux d'une unité de prise de vue (42).

7. Dispositif de formage selon la revendication 5, **caractérisé en ce qu'**une direction de propagation d'un faisceau de rayons émis par le dispositif d'éclairage (36) est sensiblement opposée à une direction de propagation d'un faisceau de rayons émis par la face frontale (34) de la pièce à former.

8. Dispositif de formage selon l'une quelconque des revendications précédentes, **caractérisé en ce que** des dispositifs de mesure d'angle (26) sont disposés sur des côtés opposés.

9. Dispositif de formage selon l'une quelconque des revendications précédentes, **caractérisé en ce qu'**un auxiliaire de focalisation est associé à au moins un outil (18, 20).

10. Dispositif de formage selon l'une quelconque des revendications précédentes, **caractérisé en ce que** le dispositif de mesure d'angle (26) est monté sur un chariot (16) qui est monté mobile sur un bâti de base (12) et qui porte un outil (18).

11. Procédé pour le fonctionnement d'un dispositif de formage, réalisé en particulier selon l'une quelconque des revendications précédentes, **caractérisé par** les étapes :
- balayage d'une face frontale (34) de la pièce à former avec un dispositif de mesure d'angle (26) optoélectronique,
- détermination de l'état de formage de la pièce à former (22) dans un dispositif d'analyse (46) à l'appui des signaux du dispositif de mesure d'angle (26),
- émission d'un signal de formage vers un dispositif de commande (50) du dispositif de formage (10),
- focalisation d'un système optique (44) du dispositif de mesure d'angle (26) sur la face frontale (34) de la pièce à former (22), la focalisation du système optique (44) sur la face frontale (34) de la pièce à former étant effectuée sous forme automatisée.

12. Procédé selon la revendication 11, **caractérisé en ce que** la focalisation du système optique (44) sur la face frontale (34) de la pièce à former est effectuée sous forme automatisée au moyen d'un signal de distance d'un dispositif de mesure de distance.

13. Procédé selon la revendication 11 ou 12, **caractérisé en ce que** l'éclairage de la face frontale (34) de la pièce à former est effectué avec une lumière incidente.
